# EUROPEAN PATENT APPLICATION

(11) **EP 4 566 747 A1**
(43) Date of publication of application: **11.06.2025**
(21) Application number: 23850084.7
(22) Date of filing: 01.08.2023
(51) Int. Cl.: B23K 26/00, B23K 26/03, B23K 26/21

(54) **COIL WELDING DEVICE AND WELDING METHOD**

(30) Priority: 03.08.2022 JP 2022124326
(71) Applicant: FURUKAWA ELECTRIC CO., LTD., Tokyo 100-8322 (JP); NITTOKU Co., Ltd., Saitama-shi, Saitama 330-0841 (JP)
(72) Inventor: MURAYAMA, Taro, Tokyo 100-8322 (JP); YASUOKA, Tomomichi, Tokyo 100-8322 (JP); SHIGEMATSU, Takashi, Tokyo 100-8322 (JP); KAYAHARA, Takashi, Tokyo 100-8322 (JP); KADOWAKI, Hiroto, Saitama-shi, Saitama 330-0841 (JP); TSURUDA, Shuma, Saitama-shi, Saitama 330-0841 (JP); SEGAWA, Masayoshi, Saitama-shi, Saitama 330-0841 (JP)
(74) Representative: SSM Sandmair
(86) International application number: PCT/JP2023/028121
(87) International publication number: WO 2024/029530

(57) **Abstract**

A control unit 5 functions as an end part information acquisition means that acquires, from an end part image obtained of a coil, various kinds of end part information for each end part to be welded of each portion. That is, the control unit 5 is able to acquire end part information from an image of the end parts of a pair of segment coils to be welded. The control unit 5 functions as a welding condition setting means that sets a welding condition on the basis of the end part information obtained. The control unit 5, with respect to each end part pair, controls the operation and the like of a laser irradiation unit 11 on the basis of the welding condition set, so that the end parts of the pair of segment coils to be welded are irradiated with laser and integrated by welding.

## Description

### Technical Field

The present invention relates to a coil welding device and a coil welding method used in segment coil motors, for example.

### Background Art

As an example, an enameled wire circular in section has conventionally been employed as a winding used in a stator of a vehicle-mounted motor. In order to enhance a space factor, however, a flat angle winding rectangular in section is being used in recent years. Furthermore, according to a conventional manufacturing method employed in many cases, the winding has been wound on a core of the stator. By contrast, according to a coil forming method employed in response to use of the flat angle winding, the winding is configured as short segment coils, combined with a stator, and end parts of the segment coils are welded to be linked to each other.

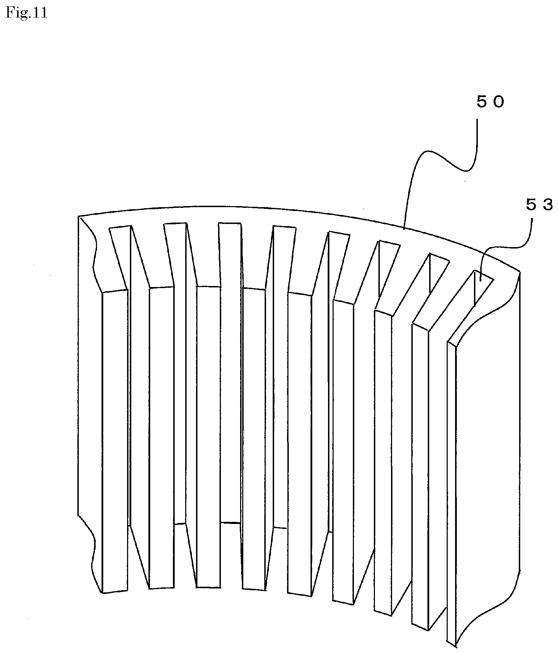

Fig. 11 is a partial perspective view showing a stator core 50. The stator core 50 has a substantially cylindrical shape, and is formed by stacking magnetic steel sheets, for example. A plurality of slots 53 is provided on an inner peripheral side of the stator core 50. A conductor is arranged in each of the slots 53 and the conductors are joined to each other, thereby forming a coil.

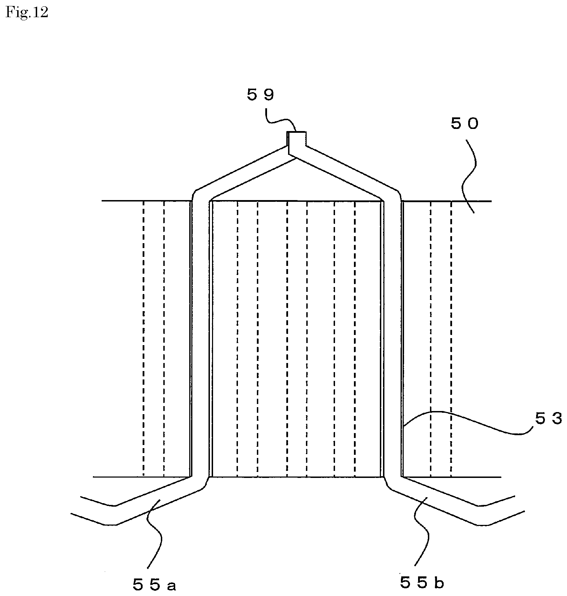

Fig. 12 is a schematic view showing a state where segment coils 55a and 55b are arranged in the slots 53. For the sake of simplicity, only a pair of the segment coils 55a and 55b is illustrated and will be described. Each of the segment coils 55a and 55b has a substantially rectangular shape in section, and includes a conductor part and an insulating layer (not shown in the drawing) covering the conductor part.

Each of the segment coils 55a and 55b is bent into a substantially U-shape, and is arranged in such a manner that both end parts thereof project from the stator core 50 on one side. In doing so, the segment coils 55a and 55b projecting from the stator core 50 are bent in predetermined directions and arranged with respective end parts in proximity to each other. These end parts form a joined part 59 where the end parts are joined to each other.

The end parts of the segment coils 55a and 55b are generally welded together by laser welding. According to a suggested method, the end parts of the segment coils 55a and 55b are arranged in contact with each other and laser is applied along a predetermined path from end face sides of the segment coils 55a and 55b, thereby welding the segment coils 55a and 55b, for example (Patent Literature 1).

### Citation List

### Patent Literature

Patent Literature 1: WO2019/159737

### Summary of Invention

### Technical Problem

According to Patent Literature 1, by inputting shapes, etc. of segment coils to be joined, end faces of the segment coils are irradiated with laser along a path responsive to the sizes thereof, thereby welding respective end parts to each other. However, this requires the end parts of the segment coils to entirely come into contact with each other in advance, resulting in bad workability.

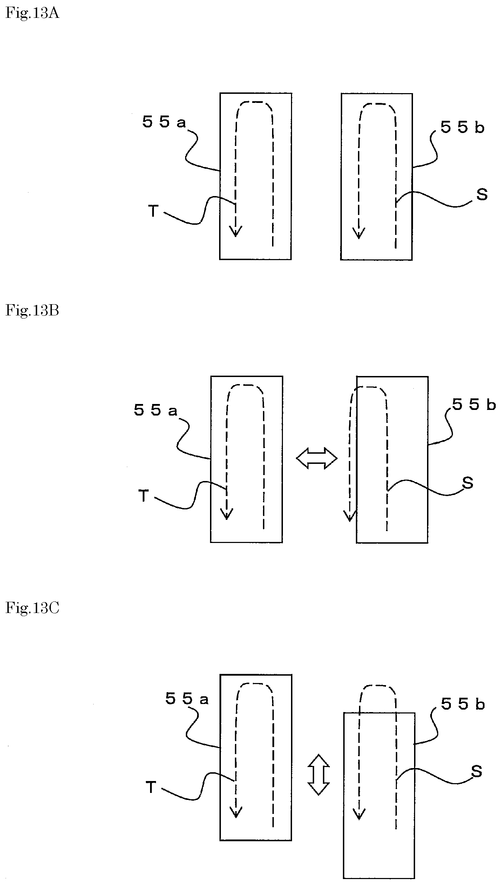

If the end parts of the segment coils 55a and 55b are separated from each other as shown in Fig. 13A, for example, it is difficult to achieve joining by employing an irradiation path such as the one in Patent Literature 1. Meanwhile, the inventors have found that, as a method of laser-welding the segment coils 55a and 55b to each other separated in this way, the end faces of the segment coils 55a and 55b are alternately swept along a predetermined path and the sweep is performed repeatedly, thereby allowing the segment coils 55a and 55b to be joined efficiently.

In the case of Fig. 13A, for example, the end face of the segment coil 55a is first swept by laser along a path S and then the end face of the segment coil 55b is swept by laser along a path T. Next, the end face of the segment coil 55a is again swept by laser along the path S and the sweep is repeated. By doing so, it is possible for the end parts of the segment coils 55a and 55b to be melted in substantially the same way and to be integrated.

However, it is difficult to arrange the segment coils 55a and 55b with high accuracy so as to locate the end parts of the segment coils 55a and 55b in constantly fixed positions. If the segment coil 55b is at a location separated from a reference relative to the segment coil 55a as shown in Fig. 13B, for example, a part of the path S deviates from the segment coil 55b, making it impossible to melt the segment coil 55b properly.

Likewise, if the segment coil 55b is at a location displaced in a vertical direction from a position of facing the segment coil 55a as shown in Fig. 13C, a part of the path S also deviates from the segment coil 55b, making it impossible to melt the segment coil 55b properly. While not shown in the drawings, the end faces of the segment coils 55a and 55b are ideally at the same height (on the same plane). However, on the occurrence of displacement of one of the segment coils 55a and 55b to a retreat position (in a depth of paper surface, for example), laser toward the segment coils 55a and 55b goes out of focus, making it impossible to melt both the segment coils 55b properly.

As described above, however, bringing end parts of segment coils into contact with each other while reliably aligning the positions of the end parts results in bad workability. Also, it is difficult to eliminate non-uniformity in the locations of the end parts completely.

The present invention has been made in view of the foregoing problems, and is aimed to provide a coil welding device and a coil welding method allowing end parts of coils such as segment coils to be welded to each other with high accuracy.

### Solution to Problem

To attain the foregoing aim, a first invention is intended for a coil welding device, comprising: an end part information acquisition means, with respect to a plurality of coils, the end part information acquisition means acquiring end part information from an image of end parts of a pair of the coils to be welded; a welding condition setting means that sets a welding condition on the basis of the end part information obtained; and a welding means that irradiates the end parts of the pair of the coils to be welded with laser to integrate the end parts on the basis of the welding condition set.

Desirably, a storage means storing a plurality of the welding conditions is provided, and the welding condition setting means reads the welding condition associated with the corresponding end part information from the storage means and sets the read welding condition.

Desirably, the end part information contains positional information in three directions perpendicular to each other about the end parts of the pair of the coils.

The end part information may contain size information about the end parts of the pair of the coils.

The end part information may contain shape information about end faces of the coils. If the end faces of the coils are determined to have shapes with corner parts, the welding condition setting means may provide each of the end faces of the coils facing each other with a laser irradiation position that is set to a position shifted externally.

A quality inspection means may be provided further. The quality inspection means judges quality after welding from an image of a welded part resulting from welding by the welding means.

A quality monitoring means may be provided further. The quality monitoring means measures thermal emission light or reflected light from a vicinity of a site irradiated with laser during welding by the welding means, and monitors that the thermal emission light or the reflected light is within a predetermined range during laser irradiation.

In this case, if the quality monitoring means recognizes that the thermal emission light or the reflected light is not within the predetermined range, the welding condition may be adjustable during welding by the welding means.

A conveyance means may be provided further. The conveyance means conveys a workpiece to the welding means after the end part information acquisition means acquires the end part information. It may be possible for the welding means to perform welding on the workpiece and for the end part information acquisition means to acquire the end part information about a next workpiece simultaneously with each other.

According to the first invention, corresponding end part information is first acquired from an image of end parts of a pair of coils to be welded. On the basis of the end part information obtained, a welding condition is set for each joined part. Thus, even if some displacement occurs in an end part position, welding can be performed under a suitable condition responsive to the displacement. This eliminates the need for locating the end parts of the coils correctly into position beforehand.

In setting a welding condition on the basis of the corresponding end part information, a plurality of the welding conditions is stored in advance into the storage means and a suitable condition is read therefrom. Thus, even if displacements in two or more directions are superimposed on each other, it is still possible to weld the end parts of the pair of the coils to each other more reliably under the suitable condition.

By incorporating the positional information in the three directions perpendicular to each other about the end parts of the pair of the coils into the end part information, it becomes possible to set a suitable welding condition responsive to every direction of position displacement.

By incorporating the size information about the end parts of the coils into the end part information, it becomes possible to achieve saving in terms of previous input of a coil size beforehand, etc. Furthermore, it becomes possible to set a suitable welding condition responsive to the size.

If the end faces of the coils are determined to have shapes with corner parts, each of the end parts of the coils facing each other is provided with a laser sweep position that is set to a position shifted externally. This makes it possible to reduce a probability that a corner shape will remain on an external side of each of the respective end faces after welding, namely, a probability of a so-called unremoved corner.

Quality inspection is conducted to judge quality after welding from an image of the end parts after welding, making it possible to judge the appropriateness of a welding condition automatically set.

During welding, thermal emission light or reflected light from a vicinity of the site irradiated with laser is measured to monitor that the thermal emission light or the reflected light is within the predetermined range. By doing so, it becomes possible to see whether welding is being performed properly during welding.

If the quality monitoring means recognizes that the thermal emission light or the reflected light is not within the predetermined range, the welding condition is adjusted during welding. This allows welding to be performed more stably.

A place for acquiring the end part information and a place for welding are provided separately, and the corresponding units perform their operations by conveying the workpiece. By doing so, it becomes possible to perform welding on the workpiece using the welding means and acquire the end part information about a next workpiece simultaneously with each other.

A second invention is intended for a coil welding method, comprising: a step of acquiring corresponding end part information with respect to a plurality of coils from an image of end parts of a pair of the coils to be welded; a step of setting a welding condition on the basis of the end part information obtained; and a step of irradiating the end parts of the pair of the coils to be welded with laser to integrate the end parts on the basis of the welding condition set.

According to the second invention, a welding condition is set suitably in response to position displacements of the both end parts, for example. This eliminates the need for locating the end parts strictly into position before welding and allows welding to be performed with high accuracy.

### Advantageous Effects of Invention

According to the present invention, it is possible to provide a coil welding device and a coil welding method allowing end parts of coils to be welded to each other with high accuracy.

### Brief Description of Drawings

Fig. 1 is a view showing the configuration of a segment coil welding device 1;
Fig. 2 is a flowchart showing steps of a segment coil welding method;
Fig. 3 is a conceptual view showing end parts and their vicinities of segment coils 17a and 17b;
Fig. 4A is a view showing a sweep path in a state where the segment coils 17a and 17b are displaced in a Y direction;
Fig. 4B is a view showing a sweep path in a state where the segment coils 17a and 17b are displaced in an X direction;
Fig. 5A is a view showing an irradiation method in a state where the segment coils 17a and 17b are displaced in a Z direction;
Fig. 5B is a view showing an irradiation method in a state where the segment coils 17a and 17b are displaced in the Z direction;
Fig. 6A is a view showing a sweep path in the absence of corner parts in the segment coils 17a and 17b;
Fig. 6B is a view showing a sweep path in the presence of corner parts in the segment coils 17a and 17b;
Fig. 7A is a view showing a sweep path after joining between the segment coils 17a and 17b;
Fig. 7B is a view showing a sweep path determined by the sizes of the segment coils 17a and 17b;
Fig. 8 is a flowchart showing steps of a segment coil welding method;
Fig. 9A is a conceptual view showing a quality control image after welding of the segment coils 17a and 17b, and is a conceptual view showing a proper welded state;
Fig. 9B is a conceptual view showing a quality control image after welding of the segment coils 17a and 17b, and is a conceptual view in a case where a difference between melted amounts is equal to or greater than a predetermined amount;
Fig. 9C is a conceptual view showing a quality control image after welding of the segment coils 17a and 17b, and is a conceptual view showing a state where welded parts next to each other are short-circuited;
Fig. 9D is a conceptual view showing a quality control image after welding of the segment coils 17a and 17b, and is a conceptual view showing a state where a constriction at a welded part is large and equal to or greater than a predetermined degree;
Fig. 10 is a flowchart showing steps of a segment coil welding method;
Fig. 11 is a partial perspective view showing a stator core 50;
Fig. 12 is a view showing a state where segment coils 55a and 55b are joined;
Fig. 13A is a conceptual view showing a laser sweep path determined by the positions of the segment coils 55a and 55b;
Fig. 13B is a conceptual view showing a laser sweep path determined by the positions of the segment coils 55a and 55b; and
Fig. 13C is a conceptual view showing a laser sweep path determined by the positions of the segment coils 55a and 55b.

### Description of Embodiment

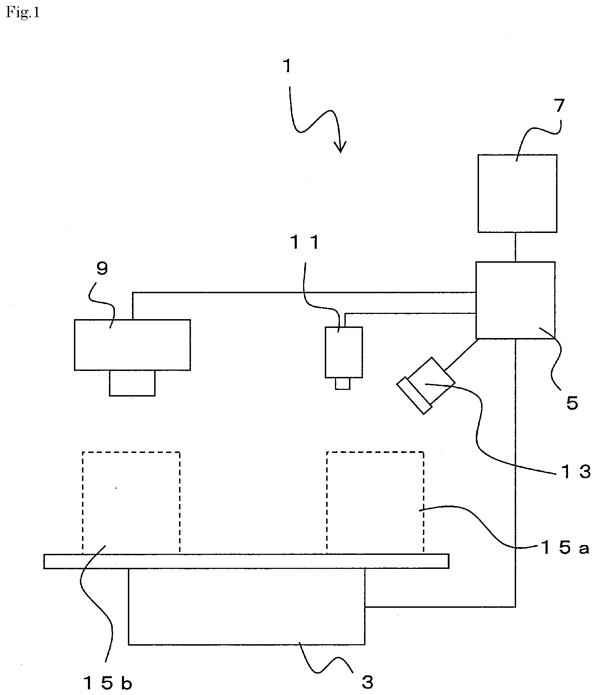

An embodiment of the present invention will be described below by referring to the drawings. Fig. 1 is a view showing the configuration of a segment coil welding device 1. The segment coil welding device 1 is mainly composed of a control unit 5, a storage unit 7, an imaging unit 9, a laser irradiation unit 11, a detection unit 13, etc. The segment coil welding device 1 is a device for welding end parts of a plurality of segment coils arranged at a stator core, as described above.

The imaging unit 9 is capable of capturing a digital image of end parts of a pair of segment coils to be welded. While one workpiece has a large number of parts to be welded, the imaging unit 9 is not always required to acquire respective images of all the parts to be welded but may acquire an image at one time including a plurality of the parts to be welded.

The imaging unit 9 is connected to the control unit 5. The control unit 5 is a unit to control operation of each unit, to perform calculations, etc., and is configured together with the storage unit 7 described later using a computer, for example. Data about an end image captured by the imaging unit 9 is transmitted to the control unit 5. The control unit 5 is capable of acquiring end part information from an image of end parts of a pair of segment coils to be welded. Specifically, the control unit 5 functions as an end part information acquisition means that acquires, from an end part image obtained, various kinds of end part information for each end part to be welded of each portion. The control unit 5 is capable of storing the end part information and positional information about each portion as a target of the end part information in association with each other into the storage unit 7. The end part information will be described later in detail.

The laser irradiation unit 11 is a welding means capable of performing welding by irradiating a part to be welded with laser. The laser irradiation unit 11 is controlled by the control unit 5, and is capable of integrating end parts of a pair of segment coils to be welded by irradiating the end parts with laser on the basis of a welding condition set by the control unit 5. The laser irradiation unit 11 is capable of performing the irradiation continuously while sweeping an irradiated site in a predetermined direction using a Galvano scanner, for example. The control unit 5 is also capable of controlling the depth of focus, intensity, etc. of laser emitted from the laser irradiation unit 11.

The detection unit 13 is capable of detecting thermal emission light or reflected light generated in irradiating a part to be welded with laser using the laser irradiation unit 11. Resultant information is transmitted in real time by the control unit 5. The control unit 5 can judge whether the thermal emission light or the reflected light is proper (normal), as necessary.

A conveyance device 3 is a conveyance means that conveys a workpiece from an operating range of the imaging unit 9 to an operating range of the laser irradiation unit 11, for example. Specifically, in the present embodiment, after the imaging unit 9 acquires end part information about each portion, the workpiece can be conveyed to an irradiation range of the laser irradiation unit 11. Thus, it is possible for the welding means to perform welding on a workpiece 15a and for the end part information acquisition means to acquire end part information about a next workpiece 15b simultaneously with each other. The conveyance device 3 may be of any type such as a rotary table type or a belt conveyor type.

The storage unit 7 is capable of storing various kinds of information. For example, the storage unit 7 stores a plurality of welding conditions. With respect to each end part information about each portion described above, the control unit 5 can read a suitable welding condition associated with corresponding end part information from the storage unit 7 (storage means) and set the read welding condition. Specifically, the control unit 5 functions as a welding condition setting means that sets a welding condition on the basis of the end part information obtained. The welding condition to be set includes some or all of a number of irradiation times, an irradiation position (sweep position), a depth of focus, an output, etc., for example. The control unit 5 can store an image acquired by the imaging unit 9, end part information obtained from the image, quality information obtained by the detection unit 13 described above, etc.

The configuration of the segment coil welding device 1 is not limited to the example shown in the drawing. Other structures may be added as appropriate, or some of the structures may be omitted. For example, image acquisition by the imaging unit 9 and welding by the laser irradiation unit 11 may be performed at the same site in two steps without using the conveyance device 3. Without using the detection unit 13, quality may be controlled by a different method. While units may be controlled by respective control units, these control units are collectively defined as the single control unit 5 in the present invention.

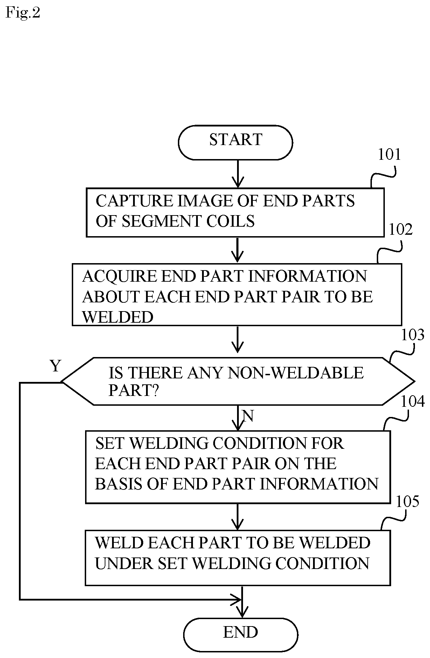

Described next is an example of a method of welding segment coils using the segment coil welding device 1. Fig. 2 is a flowchart showing an example of operation of the segment coil welding device 1.

First, the imaging unit 9 captures an end part image of segment coils (step 101). As described above, each segment coil is arranged at a stator core and is arranged inside the welding device. As end parts of a pair of segment coils to be welded (hereinafter simply called "an end part pair") includes a large number of end parts, an image covering a plurality of predetermined ranges may be acquired in such a manner that a plurality of end part pairs appear in one image.

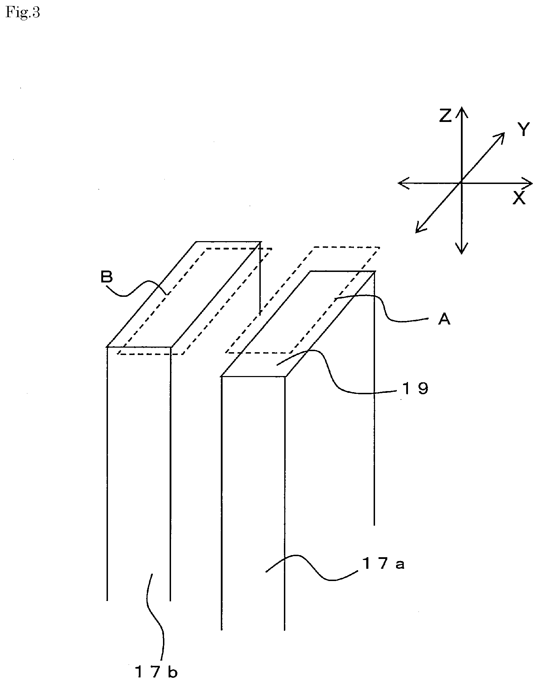

Fig. 3 is a conceptual view showing end parts and their vicinities of segment coils 17a and 17b (end part pair). Here, a direction in which the segment coils 17a and 17b face each other is defined as an X direction, axis directions of the segment coils 17a and 17b are defined as a Z direction, and a direction (a direction in which the segment coils 17a and 17b are laterally displaced from each other) vertical to the X direction and the Z direction is defined as a Y direction. To allow the imaging unit 9 to grasp a position in the three directions perpendicular to each other, setting such as a direction of imaging is provided. For example, images from a plurality of directions may be captured for one end part pair, or a position in the Z direction may be grasped by obtaining information about the depth of focus of an end face in acquiring an image from the Z direction.

Next, the control unit 5 acquires end part information about each end part pair to be welded (step 102). Specifically, with respect to a plurality of segment coils (end part pairs) arranged at the stator core, the control unit 5 acquires, from an image of end parts of a pair of segment coils to be welded, corresponding end part information.

As described above, the end part information desirably contains positional information in the three directions perpendicular to each other about end parts of a pair of segment coils (end part pair). As an example, a position as a reference for each end part pair is set relative to a reference point at the stator core. Information about the reference position for each end part pair is stored in the storage unit 7, for example. In doing so, the control unit 5 acquires the amounts of displacement of each end part pair in the three directions from the reference position.

In the example shown in Fig. 3, the position of an end face 19 of the segment coil 17a (a position in the XYZ direction) acquired from a real image is calculated relative to a reference position A (a position in the XYZ direction) for the segment coil 17a. Likewise, the position of an end face 19 of the segment coil 17b (a position in the XYZ direction) acquired from a real image is calculated relative to a reference position B (a position in the XYZ direction) for the segment coil 17b.

Next, the control unit 5 judges whether the amount of displacement of each end part pair from the reference position is large and equal to or greater than a predetermine amount. If the amount of displacement is large and equal to or greater than the predetermined amount, for example, the control unit 5 determines that proper welding through laser irradiation is impossible (step 103). If the presence of a non-weldable end part pair is judged, welding is not performed thereafter and the operation is finished. Alternatively, a next welding step may be performed except a non-weldable site. In either case, a site where abnormality occurs at an end part pair thereof can be displayed on a display unit, for example.

Next, the control unit 5 sets a welding condition for each end part pair on the basis of the end part information (step 104). For example, using the end part information obtained about the end part pair, the control unit 5 reads a welding condition associated with the corresponding end part information from the storage unit 7 and sets the read welding condition. Furthermore, with respect to each end part pair, the control unit 5 controls the operation and the like of the laser irradiation unit 11 on the basis of the welding condition set, so that the end parts of the pair of segment coils to be welded are irradiated with laser and integrated by welding (step 105).

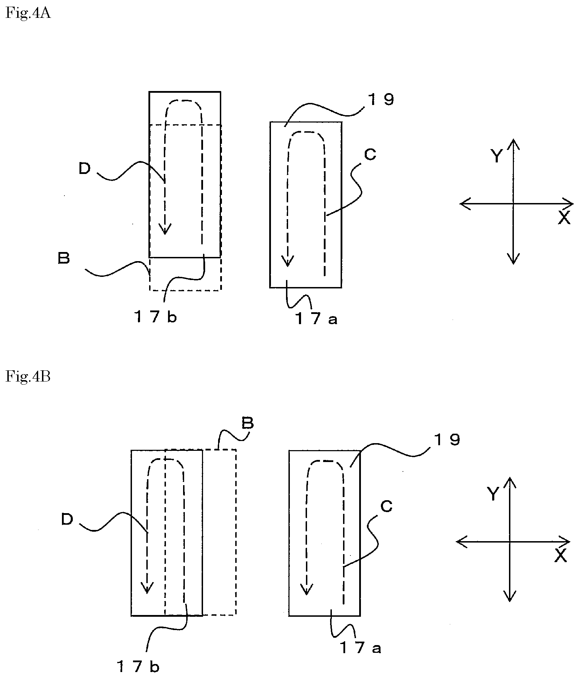

Figs. 4A and 4B are views showing exemplary settings of welding conditions (sweep position, etc.) according to the states of an end part pair. For the sake of simplicity, in the following examples shown in the drawings, only the segment coil 17b is displaced from the reference. In the following examples, a sweep position C and a sweep position D are to be irradiated with laser alternately. In doing so, an irradiation position (sweep position) may be changed in response to a number of irradiation times.

Fig. 4A is a view showing a state where the segment coil 17b is displaced from the reference position B in the Y direction. In this case, as a welding condition, the control unit 5 adjusts the sweep positions C and D for laser for irradiation of the respective end faces 19 of the segment coils 17a and 17b so as to be responsive to the displacement.

Fig. 4B is a view showing a state where the segment coil 17b is displaced from the reference position B in the X direction. In this case, the control unit 5 also adjusts the sweep positions C and D for laser for irradiation of the respective end faces 19 of the segment coils 17a and 17b so as to be responsive to the displacement.

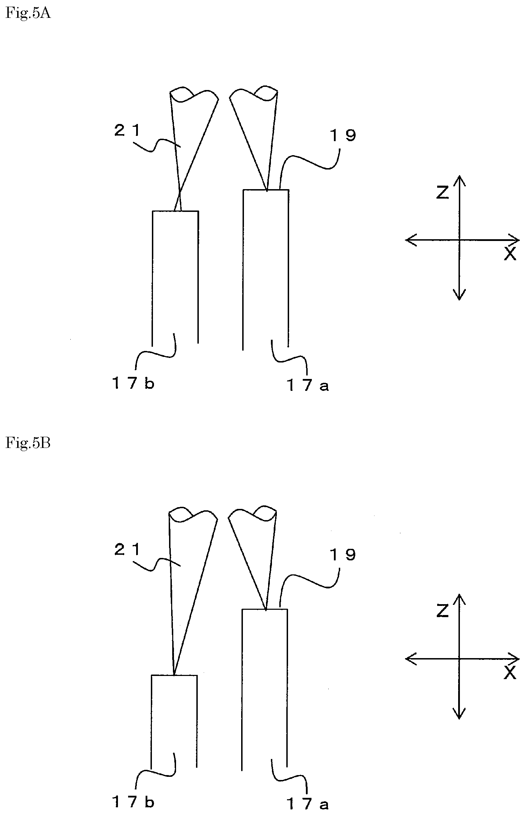

Figs. 5A and 5B are views each showing a case where the positions of the end faces 19 of the segment coils 17a and 17b are displaced in the Z direction. If the amount of the displacement in the Z direction is equal to or less than a predetermined amount as shown in Fig. 5A, for example, with a focus on the end face 19 of the segment coil at a higher end face position (segment coil 17a), the segment coil 17b may be irradiated with laser at a depth of this focus. In this case, the segment coil 17a in focus is melted preferentially to increase the amount of the melt. By doing so, it becomes possible to absorb the difference in height position between the segment coils.

By contrast, if the amount of the displacement in the Z direction is equal to or greater than the predetermined amount as shown in Fig. 5B, a focus may be adjusted on each of the end face 19 of the segment coil 17a at a higher end face position and the end face 19 of the segment coil 17b at a lower end face position, and a number of laser irradiation times of the segment coil 17a at the higher end face position may be increased. In this case, the segment coil 17a irradiated with laser more times is melted to a larger amount, making it possible to absorb the difference in height position between the segment coils.

While the displacement occurs in one direction in each of the cases described above, a suitable condition is set for the displacement in each of the three directions. As an example, a welding condition is established in advance for each combination of the amounts of displacement in the corresponding directions and is stored into the storage unit 7. On the basis of a combination of displacement amount ranges in the three directions for each end part pair, the control unit 5 can read a corresponding associated welding condition and perform welding.

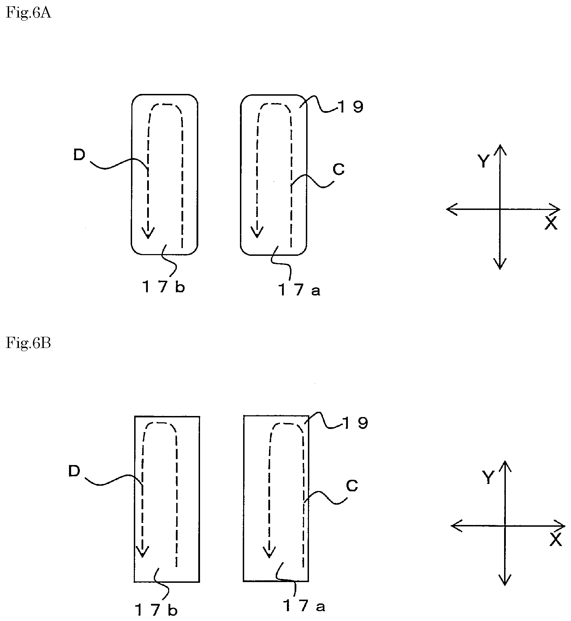

End part information about a pair of the segment coils 17a and 17b may contain shape information about the end faces 19 of the segment coils 17a and 17b as well as positional information about the end parts. Fig. 6A is a view showing a state where the end faces 19 of the segment coils 17a and 17b have no corner parts (by being subjected to chamfering process), for example. In this case, if the control unit 5 determines that there are no corners (determines that chamfering process has been performed on corners) as a result of reading end face shapes, the control unit 5 sweeps the respective end faces 19 by laser irradiation under a normal condition.

By contrast, if the control unit 5 determines that the end faces of the segment coils 17a and 17b have shapes with corner parts as shown in Fig. 6B, the control unit 5 provides each of the end faces 19 of the segment coils 17a and 17b facing each other with a laser irradiation and sweep position that is set to a position shifted externally (shifted in the X direction and on an opposite side to a direction in which the segment coils 17a and 17b face each other). By doing so, it becomes possible to reduce a probability that a corner part will remain after welding. As described above, the sweep positions may be shifted externally from each other in some cases of irradiation performed a predetermined number of times.

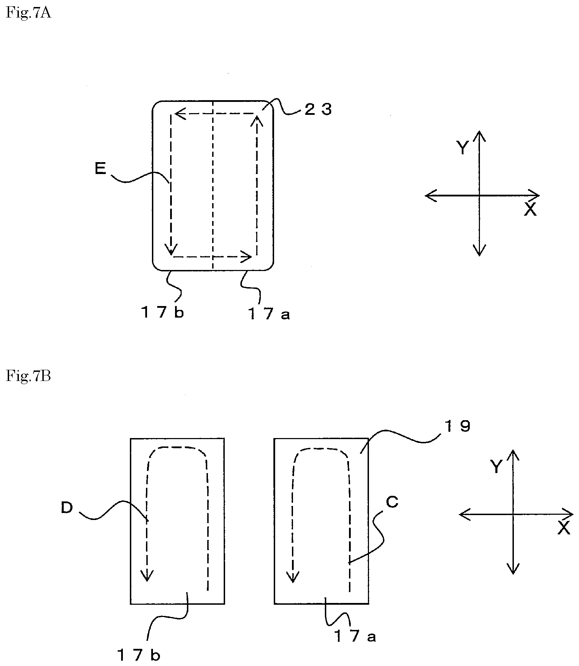

As shown in Fig. 7A, end parts after welded to each other (welded part 23) may be irradiated with and swept by laser around an outer periphery thereof (see arrows E in the drawing). By doing so, it also becomes possible to reduce a probability of the occurrence of an unremoved corner in an outer shape of the welded part 23 after welding.

The end part information about a pair of the segment coils 17a and 17b may contain size information. As shown in Fig. 7B, for example, suitable sweep positions C and D can be set in response to the sizes of the segment coils 17a and 17b.

When welding is finished on all end part pairs to be welded, the control unit 5 finishes the welding operation.

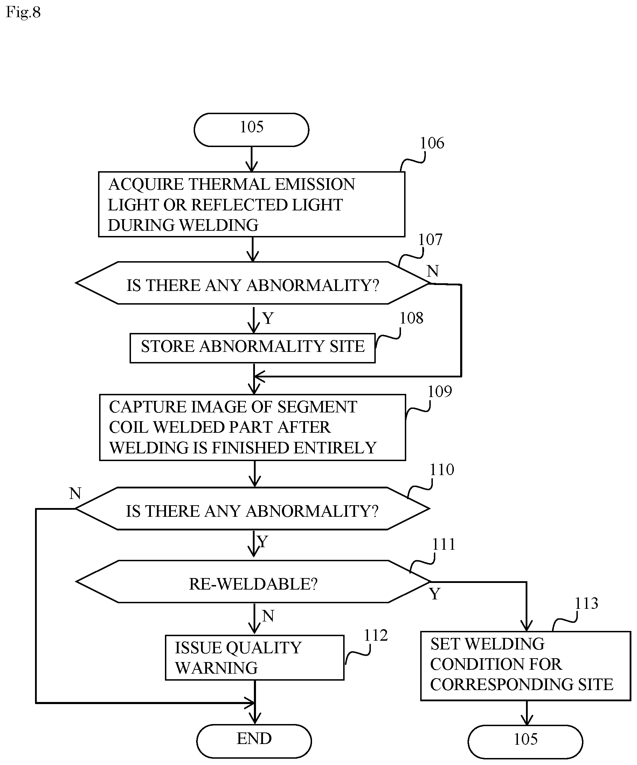

It is possible to monitor welding quality in the segment coil welding device 1. Fig. 8 is a flowchart showing exemplary steps of quality control. As described above, the detection unit 13 (Fig. 1) is capable of measuring thermal emission light or reflected light from a vicinity of a site irradiated with laser (a vicinity of an end face of a segment coil) during welding by the laser irradiation unit 11. The control unit 5 acquires the intensity of thermal emission light or reflected light generated during laser irradiation, and monitors in real time that the thermal emission light or the reflected light is within a predetermined range set in advance (step 106). Specifically, the detection unit 13 and the control unit 5 function as a quality monitoring means during welding.

As an example, thermal emission light or reflected light is comparatively stable if welding is performed properly. On the occurrence of an abnormality point (such as blowhole, pit, or humping, for example), thermal emission light or reflected light fluctuates largely. Thus, monitoring this fluctuation makes it possible to see in real time whether welding is being performed stably.

If the control unit 5 determines the presence of the abnormality during welding (step 107), the control unit 5 stores a site of the abnormality into the storage unit 7 (step 108). By identifying the abnormality site, it becomes possible to make subsequent quality check in more detail.

When welding is finished on all joining targets, the control unit 5 acquires an image of a welded part of segment coils (step 109). In the example shown in Fig. 1, the conveyance device 3 conveys a workpiece from a welding area to an imaging area to allow the imaging unit 9 to capture an image of each welded part 23.

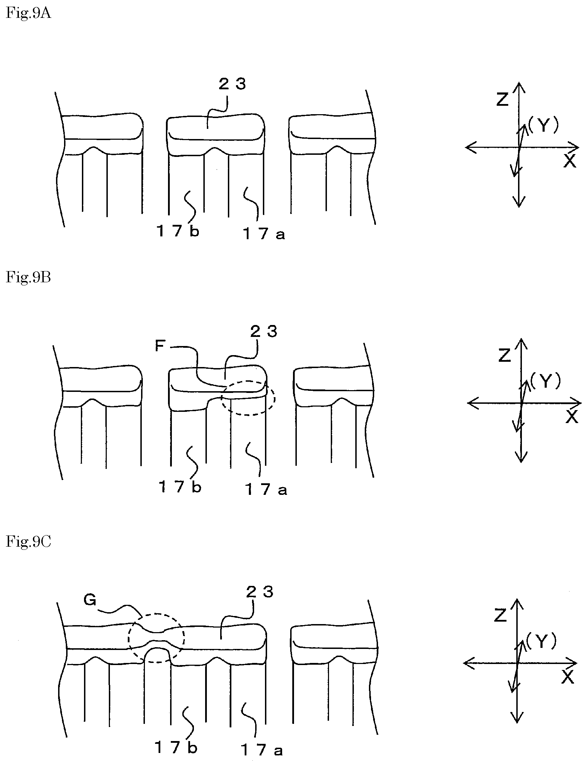

Fig. 9A is a conceptual view showing an example of the acquired image. In the illustrated example, the imaging unit 9 acquires an image of the welded part 23 from obliquely upward, which is a direction substantially perpendicular to a direction in which the segment coils 17a and 17b face each other, for example. As described above, a single image may include a plurality of the welded parts 23.

The control unit 5 judges whether abnormality is present at the welded part 23 from the image captured by the imaging unit 9 (step 110). Specifically, the control unit 5 functions as a quality inspection means that judges quality after welding from the image of the welded part 23 resulting from welding by the laser irradiation unit 11.

The image shown in Fig. 9A is used as a reference, for example. Then, as shown in Fig. 9B, if a difference in the amount of melt between the segment coils 17a and 17b is determined to be greater than a reference range (if the amount of melt of one of the segment coils 17a and 17b is determined to be less than the reference range) (a site F in the drawing), this site is judged to be abnormal.

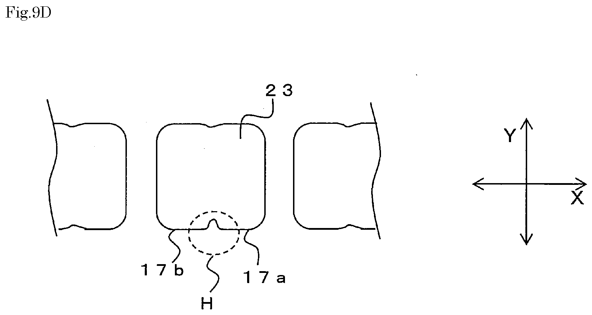

As shown in Fig. 9C, if the welded parts 23 of end part pairs next to each other are in contact (a site G in the drawing), the occurrence of abnormality is determined. As shown in Fig. 9D, if a constriction is greater than a predetermined reference range in a plan view of the welded part 23 (a site H in the drawing), the occurrence of abnormality is determined. In another case, luster of the welded part 23 is determined, for example. If the luster is equal to or greater than a predetermined reference, quality is determined to be favorable. If the luster is insufficient, oxidation is determined to be highly developed and the occurrence of abnormality is determined.

In making quality check using an image, the control unit 5 may use a quality standard (or a quality item) stricter than usual for evaluating the quality of the site checked to have abnormality (step 108) as a result of quality evaluation using thermal emission light or reflected light during welding. Specifically, if the abnormality is determined by the quality check during welding, a degree of the abnormality may be checked in more detail in making the quality evaluation using the image.

With respect to the abnormality having been found by the quality check using the image, the control unit 5 determines whether the abnormality site can be normalized by re-welding (step 111). In the case of Fig. 9B, for example, it is possible to attain a balance between the amounts of melt by performing welding further on the side of the segment coil 17a. In the case of Fig. 9D, it is possible to achieve a proper configuration by melting the largely constricted site further.

As described above, if the abnormality site is re-weldable, the control unit 5 sets a welding condition suitable for this site again and re-welds the site (step 113). A condition for re-welding of the abnormality site is set in advance in response to the type, degree, position or the like of the abnormality site. The control unit 5 can set a welding condition responsive to the criterion by reading such a welding condition from the storage unit 7. In performing the re-welding, the control unit 5 allows implementation of the welding by the laser irradiation unit 11 by driving the conveyance device 3 and conveying the workpiece to the welding area.

If re-welding of the abnormality is impossible or if the abnormality is not eliminated by the re-welding, the control unit 5 issues a warning about quality and finishes the operation (step 112). The workpiece for which the warning about quality has been issued is judged to be a defective item.

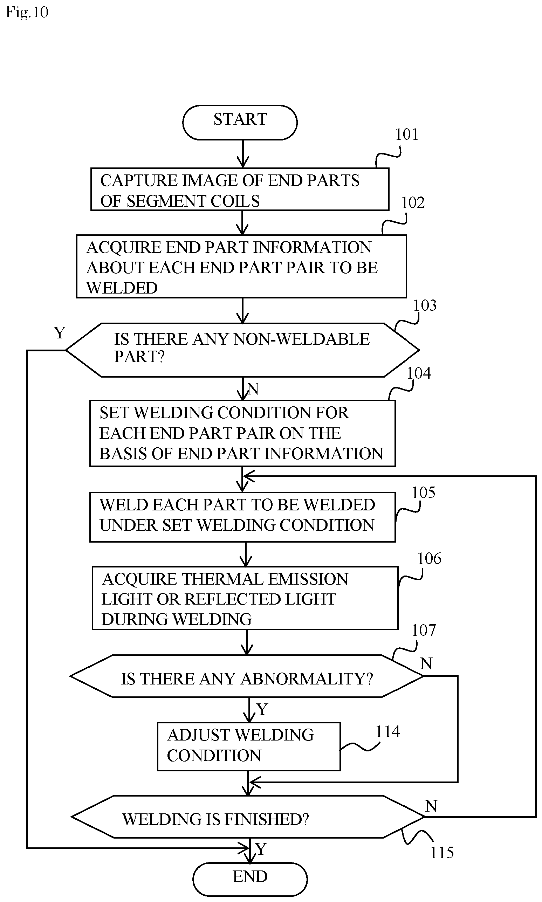

It is possible to monitor welding quality and feed the welding quality back in real time to a welding condition in the segment coil welding device 1. Fig. 10 is a flowchart showing exemplary welding steps. In the example shown in Fig. 10, if the quality monitoring means recognizes that thermal emission light or reflected light is not within a predetermined range, a welding condition can be adjusted during welding by the welding means.

In Fig. 10, steps from step 101 to step 105 are the same as those shown in Fig. 2. Furthermore, steps including step 106 and step 107 are the same as those shown in Fig. 8. For this reason, repetition of the description about the steps from step 101 to step 107 will be omitted.

In the example shown in Fig. 10, the detection unit 13 detects the intensity of thermal emission light or reflected light during welding. If the control unit 5 determines the occurrence of abnormality in the welding, the control unit 5 adjusts a welding condition temporarily in response to the abnormality (step 114). As an example, output of laser light is increased if the intensity of the thermal emission light or the reflected light becomes equal to or less than predetermined intensity. Output of laser light is reduced if the intensity of the thermal emission light or the reflected light becomes equal to or less than the predetermined intensity. Such fine adjustment of the welding condition is made in real time until welding of a targeted welded part is finished (step 115).

By exerting control in this way so as to make thermal emission light or reflected light constant within a predetermined range, a surface state of a welded part is stabilized to allow a welding range to be stabilized. Furthermore, it is possible to reduce an unstable region in a period from when irradiation is started to when weld penetration develops sufficiently.

According to the present embodiment described above, an image of end parts of segment coils is obtained before welding, so that it is possible to set a welding condition from the image suitable for each end part pair to be welded. This reduces poor welding, making it possible to perform welding at stable quality. Furthermore, burden such as bringing the segment coils into contact with each other is eliminated before welding and a certain degree of non-uniformity can be allowed for in terms of location.

A suitable condition responsive to the state of an end part pair is stored in advance as a welding condition into the storage unit 7, thereby allowing implementation of welding under a stable condition. Instead of storing the welding condition in advance into the storage unit 7, a laser irradiation position, etc. may be determined by calculation from obtained end part information. Specifically, instead of generating a program in advance, a laser irradiation position may be corrected on an as needed basis in response to position displacement from a reference for setting a welding condition.

By using positional information about an end part in the three directions perpendicular to each other as end part information for setting a welding condition, it becomes possible to set a suitable welding condition responsive to position displacement in any of the directions.

By incorporating size information about an end part of a segment coil into end part information for setting a welding condition, it becomes possible to perform welding under a suitable condition responsive to the size of the end face 19 of the segment coil.

By incorporating shape information about a segment coil into end part information for setting a welding condition, it becomes possible to perform welding under a suitable condition responsive to the presence or absence of implementation of chamfering process, for example.

By judging the quality of a welded part from an image captured after welding, it becomes possible to detect abnormality at the welded part reliably. In doing so, it is possible to judge the possibility or impossibility of re-welding in response to the type of the abnormality.

By measuring thermal emission light or reflected light from a vicinity of a site irradiated with laser during welding, it becomes possible to detect the presence or absence of abnormality in real time during welding. In this case, it is possible to perform welding stably by adjusting a welding condition in real time on the basis of result of the measurement about the thermal emission light or the reflected light.

By providing the conveyance device 3 that conveys a workpiece between a unit to acquire an image and a unit to perform welding, it becomes possible to acquire an image of a next workpiece simultaneously during welding. Thus, it is possible to conduct welding work efficiently.

Although the embodiments of the present invention have been described in detail above with reference to the accompanying drawings, the present invention is not influenced by the embodiments. It should be obvious to those in the field that examples of various changes and modifications are included within the realm of the technical idea of the present invention described in the claims, and it should be understood that such examples are certainly included in the technical scope of the present invention.

### Reference Sign List

- 1: Segment coil welding device
- 3: Conveyance device
- 5: Control unit
- 7: Storage unit
- 9: Imaging unit
- 11: Laser irradiation unit
- 13: Detection unit
- 15a, 15b: Workpiece
- 17a, 17b: Segment coil
- 19: End face
- 21: Laser
- 23: Welded part
- 50: Stator core
- 52: Slot
- 55a, 55b: Segment coil
- 59: Joined part

## Claims

1. A coil welding device, comprising:
an end part information acquisition means, with respect to a plurality of coils, the end part information acquisition means acquiring end part information from an image of end parts of a pair of the coils to be welded;
a welding condition setting means that sets a welding condition on the basis of the end part information obtained; and
a welding means that irradiates the end parts of the pair of the coils to be welded with laser to integrate the end parts on the basis of the welding condition set.

2. The coil welding device according to claim 1, comprising:
a storage means storing a plurality of the welding conditions, wherein
the welding condition setting means reads the welding condition associated with the corresponding end part information from the storage means and sets the read welding condition.

3. The coil welding device according to claim 1, wherein
the end part information contains positional information in three directions perpendicular to each other about the end parts of the pair of the coils.

4. The coil welding device according to claim 1, wherein
the end part information contains size information about the end parts of the pair of the coils.

5. The coil welding device according to claim 1, wherein
the end part information contains shape information about end faces of the coils, and
if the end faces of the coils are determined to have shapes with corner parts, the welding condition setting means provides each of the end faces of the coils facing each other with a laser irradiation position that is set to a position shifted externally.

6. The coil welding device according to claim 1, further comprising:
a quality inspection means that judges quality after welding from an image of a welded part resulting from welding by the welding means.

7. The coil welding device according to claim 1, further comprising:
a quality monitoring means that measures thermal emission light or reflected light from a vicinity of a site irradiated with laser during welding by the welding means, and monitors that the thermal emission light or the reflected light is within a predetermined range during laser irradiation.

8. The coil welding device according to claim 7, wherein
if the quality monitoring means recognizes that the thermal emission light or the reflected light is not within the predetermined range, the welding condition is adjustable during welding by the welding means.

9. The coil welding device according to claim 1, further comprising:
a conveyance means that conveys a workpiece to the welding means after the end part information acquisition means acquires the end part information, wherein
it is possible for the welding means to perform welding on the workpiece and for the end part information acquisition means to acquire the end part information about a next workpiece simultaneously with each other.

10. A coil welding method, comprising:
a step of acquiring corresponding end part information with respect to a plurality of coils from an image of end parts of a pair of the coils to be welded;
a step of setting a welding condition on the basis of the end part information obtained; and
a step of irradiating the end parts of the pair of the coils to be welded with laser to integrate the end parts on the basis of the welding condition set.
